# EUROPEAN PATENT APPLICATION

(11) **EP 2 202 606 A2**
(43) Date of publication of application: **30.06.2010**
(21) Application number: 09180378.3
(22) Date of filing: 22.12.2009
(51) Int. Cl.: G06F 1/16

(54) **Adaptive keypad device for portable terminal and control method thereof**

(30) Priority: 24.12.2008 KR 20080133913; 07.09.2009 KR 20090084110
(71) Applicant: Samsung Electronics Co., Ltd., Suwon-si Gyeonggi-do (KR)
(72) Inventor: Kim, Se-Jin, Gyeonggi-do 442.742 (KR); Lee, Joo-Hoon, Gyeonggi-do 442-742 (KR); Jung, Sun-Tae, Gyeonggi-do 442-742 (KR); Kim, Gwan-Hyung, Gyeonggi-do 442-742 (KR)
(74) Representative: Grünecker, Kinkeldey, Stockmair & Schwanhäusser Anwaltssozietät

(57) **Abstract**

Provided are an adaptive keypad device for a portable terminal and a method for controlling the adaptive keypad device. The adaptive keypad device includes a display screen being opened from or slid on a keypad by a user in at least two directions, an adaptive keypad on which letters or numbers are re-oriented and displayed in the same direction as a direction in which the display screen is opened or slid, a display element disposed on a side surface of the adaptive keypad, and a controller being connected to the display element to control a display state of the display element according to the direction of the opening or sliding of the display screen.

## Description

### BACKGROUND OF THE INVENTION

### 1. Field of the Invention

The present invention relates generally to a portable terminal, and more particularly, to an apparatus and method for controlling an adaptive keypad device according to an input mode in a portable terminal.

### 2. Description of the Related Art

With the development of wireless communication technology, the spread of portable terminals is rapidly expanding.

In line with this, common carriers or communication service providers are providing various services to meet various demands of subscribers.

At present, mobile carriers not only allow calls to be free from space and time constraints, but also provide a variety of services, such as a wireless Internet service, a text message service, and a multimedia service, through portable terminals. Examples of the text message service include a Short Message Service (SMS), a Multimedia Messaging Service (MMS), and the like. Examples of the multimedia service include images, moving pictures, digital broadcasting, and so forth.

Recently, users are able to transmit private e-mails and text messages, browse the Internet, and draw up a document by using portable terminals. As information input means for these additional functions, keypads are most commonly used.

The portable terminal has a small-size Qwerty type keypad to facilitate the input of characters, e.g., numbers, English letters, symbols, etc. Keys formed in the Qwerty keypad constitute a key arrangement allowing for the input of a number, a letter, or a symbol.

More specifically, the Qwerty keypad includes a plurality of keys each assigned with one English alphabet letter, and further includes predetermined functional keys such as a space key, an enter key, and so forth. The Qwerty keypad having such an arrangement is structured based on a keyboard of a personal computer or a laptop computer.

However, due to the horizontal arrangement of the plurality of keys, the above-structured keypad is an impediment to the miniaturization of a portable terminal which also has to include a display device. Moreover, the Qwerty keypad, although convenient for inputting English letters, has low portability, and has some problems such as limited space to print characters in a native language corresponding to each country, together with the English letters, and modification of an existing native language input scheme due to the space constraint.

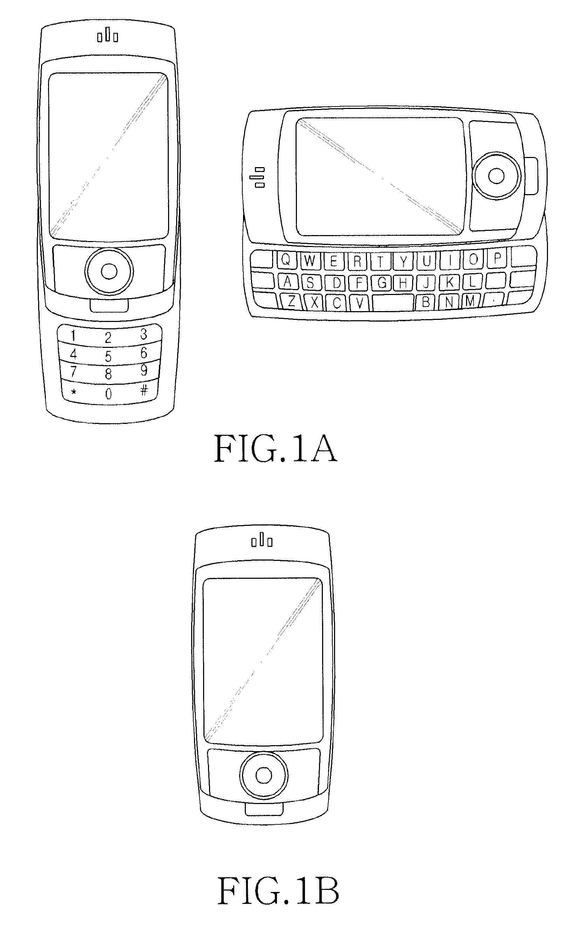

FIGs. 1A and 1B are diagrams of a portable terminal having a plurality of keypads corresponding to a text mode and a numeric mode, respectively, according to the prior art. As shown in FIGs. 1A and 1B, a portable terminal includes a plurality of keypads, and a plurality of housings for exposing the plurality of keypads, causing mechanical instability and increasing the thickness of the portable terminal. If a single keypad is used, characters oriented in different directions are printed onto a plurality of key buttons, degrading character visibility and thus lowering user satisfaction.

### SUMMARY OF THE INVENTION

An aspect of the present invention is to address at least the above problems and/or disadvantages and to provide at least the advantages described below. Accordingly, an aspect of the present invention is to provide a method and apparatus which not only maintains a slim structure of a portable terminal but also provides user convenience in a key input operation, by arranging letters and numbers oriented in different directions corresponding to different input modes in a single keypad.

According to an aspect of the present invention, there is provided an adaptive keypad device for a portable terminal. The adaptive keypad device includes a display screen being opened from or slid on a keypad by a user in at least two directions, an adaptive keypad on which letters or numbers are re-oriented and displayed in the same direction as a direction in which the display screen is opened or slid, a display element disposed on a side surface of the adaptive keypad, and a controller being connected to the display element to control a display state of the display element according to the direction of the opening or sliding of the display screen.

According to another aspect of the present invention, there is provided a method for controlling an adaptive keypad device for a portable terminal. The method includes setting a direction of letters or numbers of a keypad according to a movable direction of a display screen, sensing a direction of sliding or opening of the display screen, and redirecting and displaying the letters or the number of the keypad according to the sensed movement direction of the display screen.

### BRIEF DESCRIPTION OF THE DRAWINGS

The above and other features and advantages of an exemplary embodiment of the present invention will be more apparent from the following detailed description taken in conjunction with the accompanying drawings, in which:
FIGs. 1A and 1B are diagrams of a portable terminal having a plurality of keypads corresponding to a text mode and a numeric mode, respectively, according to prior art;
FIGs. 2A and 2B are diagrams of a portable terminal according to an embodiment of the present invention;
FIG. 3 is a flowchart of a method for controlling an adaptive keypad device for a portable terminal according to an embodiment of the present invention;
FIG. 4 is a block diagram of an adaptive keypad device for a portable terminal according to an embodiment of the present invention; and
FIG. 5 is a cross-sectional view of an adaptive keypad included in a portable terminal according to an embodiment of the present invention to explain an operating principle of the adaptive keypad.

### DETAILED DESCRIPTION OF THE EXEMPLARY EMBODIMENT

Hereinafter, embodiments of the present invention will be described in detail with reference to the accompanying drawings. In the following description, the matters defined in the description are provided to assist a comprehensive understanding of the present invention, and it is obvious to those of ordinary skill in the art that predetermined modifications or changes of the matters described herein can be made without departing from the scope of the invention.

In an embodiment of the present invention, a portable terminal is capable of performing key input. =The present invention can be applied to any type of information communication apparatus and multimedia apparatus such as mobile communication terminals, digital broadcasting terminals, Personal Digital Assistants (PDAs), smart phones, International Mobile Telecommunication (IMT)-2000 terminals, Wideband Code Division Multiple Access (WCDMA) terminals, and Universal Mobile Telecommunication Service (UMTS) terminals, and applications thereof.

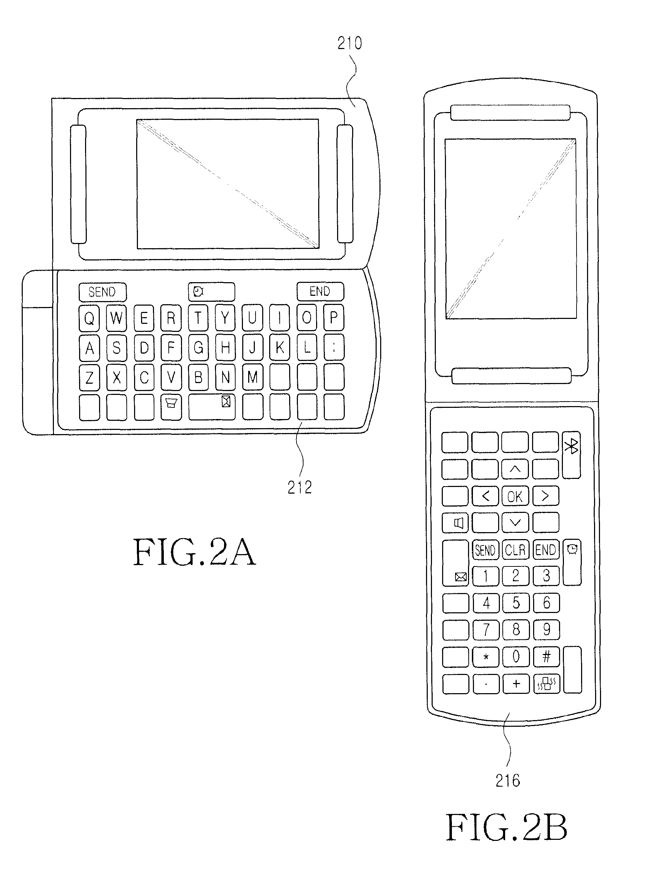

FIGs. 2A and 2B are diagrams of a portable terminal according to an embodiment of the present invention.

A portable terminal to which the present invention is applied includes a display screen 210 and a keypad 212. The display screen 210 displays screen data corresponding to an operation of the portable terminal and can be redirected (or reoriented) when opened or slid by a user. The keypad 212 is exposed to allow the user to input letters, numbers, symbols, and direction keys at the request of the user after the display screen 210 is opened or slid by the user.

In the following description, a direction of the display screen 210 being opened or slid as shown in FIG. 2A will be defined as a vertical direction or a first direction and a direction of the display screen 210 being opened or slid as shown in FIG. 2B will be defined as a horizontal direction or a second direction. The display screen 210 is slid by the user in a particular direction in the case of a dual slide-type terminal, and is opened by the user in a particular direction in the case of a dual folder-type terminal. The display screen 210, when being applied to a dual slide-type terminal, is coupled to a main body of the portable terminal by means of sliding modules, such that it can move in the vertical direction as shown in FIG. 2A and move in the horizontal direction as shown in FIG. 2B.

The display screen 210, when being applied to a dual folder-type terminal, is hinge-coupled to a main body of the portable terminal on any one surface thereof, such that it can move in the vertical direction as shown in FIG 2A and in the horizontal direction as shown in FIG. 2B. When the display screen 210 is opened or slid by the user in the vertical direction as shown in FIG. 2A, letters (e.g., in English or a native language) are directed in the vertical direction as shown in the keypad 212 to allow input of the letters. When the display screen 210 is opened or slid by the user in the horizontal direction as shown in FIG. 2B, numbers are directed in the horizontal direction as shown as indicated by 216 to allow input of the numbers for dialing.

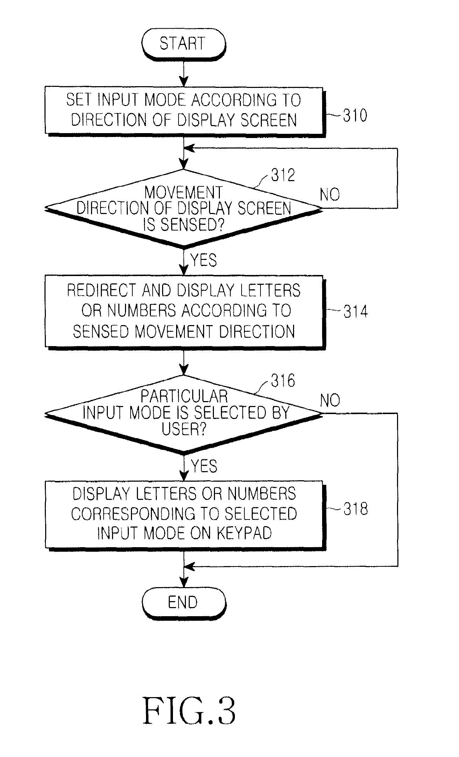

Although it is described that letters are displayed on the keypad 212 when the display screen 210 is opened or slid in the vertical direction as shown in FIG. 2A, and numbers are displayed on the keypad 212 as indicated by 216 when the display screen 210 is opened or slid in the horizontal direction as shown in FIG. 2B, the present invention will not be limited thereto as is obvious to those of ordinary skill in the art. With reference to FIG. 3, a description will now be made of detailed operations of the portable terminal to which the present invention is applied.

FIG. 3 is a flowchart of a method for controlling an adaptive keypad device for a portable terminal according to an embodiment of the present invention.

Referring to FIG. 3, an input mode is set according to a direction of a display screen of the portable terminal in step 310. If the display screen is moved by a user in a predetermined direction, it means that the display screen and a keypad are powered on such that screen data corresponding to an operation of the portable terminal can be displayed.

The input mode is an operation being preset in the portable terminal, such that when the display screen is moved by the user in a predetermined direction, the movement direction is sensed and an orientation of letters or numbers corresponding to the movement direction is changed. Qwerty keys, alphabets, Korean letters, numbers, or special characters are provided according to a user desired input mode. For example, when the display screen is moved by the user in the vertical direction, the direction of letters or numbers of the keypad is recognized as the vertical direction, and thus the input mode is set to a vertical input mode. When the display screen is moved by the user in the horizontal direction, the direction of the letters or numbers of the keypad is recognized as the horizontal direction, and thus the input mode is set to a horizontal input mode. In step 312, the movement direction of the display screen moved by the user is sensed.

In step 314, the letters or numbers of the keypad are redirected and displayed according to the sensed movement direction of the display screen.

After the letters or numbers are displayed on the keypad in the direction based on the movement direction of the display screen, it is determined if the user selects a particular input mode in step 316.

If the user selects the particular input mode, letters or numbers corresponding to the particular input mode are displayed on the keypad in step 318.

In other words, if the user selects a particular key from a plurality of keys included in the keypad or a particular item from a plurality of items of an input mode displayed on the display screen, e.g., a Qwerty keyboard, an alphabet keyboard, a Korean character keyboard, a numeric keyboard, and a special character keyboard, a preset particular input mode keyboard corresponding to the user's selection is displayed on the keypad.

The orientation of the letters or numbers displayed on the keypad is in the same direction as the movement direction of the display screen. The display screen is opened in the first direction or in the second direction by being coupled to the portable terminal by means of a single hinge, or is slid in the first direction by means of a first sliding module or in the second direction by means of a second sliding module.

The redirection of the letters or numbers of the keypad according to an input mode can be achieved by coating each of a plurality of keys on a printed circuit board disposed on the keypad with a metal thin film allowing for the formation of a (+) electrode (or anode) or a (-) electrode (or cathode) during manufacturing of the printed circuit board, applying the (+) electrode to keys corresponding to a current input mode, and applying the (-) electrode to keys not corresponding to the current input mode, in which the background of the plurality of keys is white.

On the other hand, according to another embodiment of the present invention, the redirection of the letters or numbers on the keypad according to an input mode can be achieved by coating each of a plurality of keys on a printed circuit board disposed on the keypad with a metal thin film allowing for the formation of a (+) or (-) electrode during manufacturing of the printed circuit board, applying the (-) electrode to keys corresponding to a current input mode, and applying the (+) electrode to keys not corresponding to the current input mode, in which the background of the plurality of keys is black.

As such, by alternately applying the (+) electrode and the (-) electrode to keys, depending on the background color of the plurality of keys, keys corresponding to the current input mode can be displayed on the keypad.

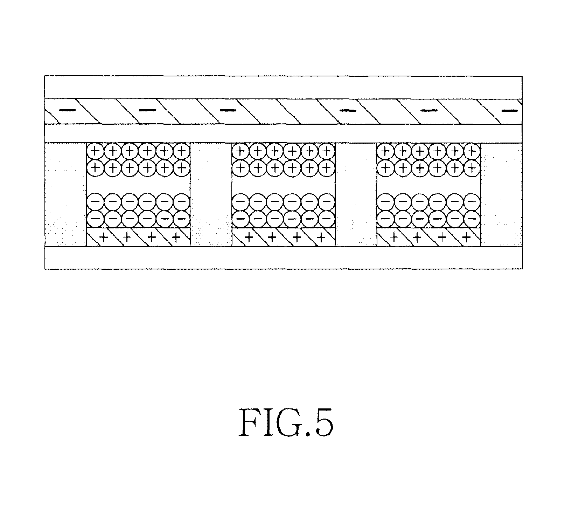

FIG. 5 is a cross-sectional view of an adaptive keypad included in a portable terminal according to an embodiment of the present invention to explain an operating principle of the adaptive keypad.

Referring to FIG. 5, a (+) electrode applied section is a section printed with electronic ink in black and a (-) electrode applied section is a section printed with electronic ink in white.

The electronic ink which is a display element disposed on one side surface of the keypad is an electrophoretic material which generates mobility by the application of an electromagnetic field, in which for example, charged particles move toward an anode or a cathode in an electric field. An image is expressed by changing the orientation of the conductive micro-particles, distributed between thin flexible boards, according to the polarity change of the electric field.

Consequently, by alternately applying the (+) electrode and the (-) electrode to keys on the keypad corresponding to a current input mode, key display can be adjusted.

In addition, the printed circuit board of the keypad included in the portable terminal according to the present invention is a flexible board which allows electronic-ink printing.

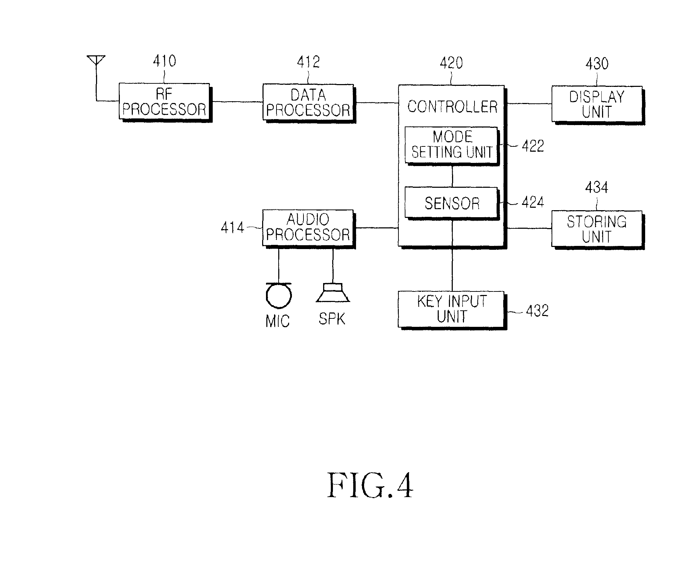

FIG. 4 is a block diagram of an adaptive keypad device for a portable terminal according to an embodiment of the present invention.

Referring to FIG. 4, the portable terminal according to the present invention includes a Radio Frequency (RF) processor 410, a data processor 412, an audio processor 414, a key input unit 432, a storing unit 434, a display unit 430, and a controller 420. The controller 420 includes a mode setting unit 422 and a sensor 424. The RF processor 410 performs communication of the portable terminal. For example, the RF processor 410 establishes a communication channel with a mobile communication system. The RF processor 410 performs voice communication and data communication over an established communication channel. The RF processor 410 may include an RF transmitter for up-converting a frequency of a transmission signal and amplifying the up-converted transmission signal and an RF receiver for low-noise-amplifying a received signal and down-converting a frequency of the low-noise-amplified signal.

The data processor 412 processes voice data transmitted from the audio processor 414, data input through the key input unit 432, and data transmitted to and received from the RF processor 410. The data processor 412 may include a transmitter for encoding and modulating a signal to be transmitted through the RF processor 410 and a receiver for demodulating and decoding a signal received through the RF processor 410. The data processor 412 may include a modem and a codec. The codec includes a data codec for processing packet data and an audio codec for processing audio signals, e.g. voice. The audio processor 414 reproduces an audio signal being output from the data processor 412 or transmits an audio signal generated from a microphone MIC to the data processor 412. The audio processor 414 converts voice/acoustic data into audible sounds through a speaker SPK and converts an audio signal, such as voice, received from the microphone MIC into a data format. The key input unit 432 allows for the input of character information such as numbers, letters in English, special characters, symbols, and letters in a native language. The key input unit 432 delivers a key signal being input in association with setting and control of various functions of the portable terminal to the controller 420.

The key input unit 432 may be a touch pad or a keypad having an arbitrary key arrangement according to a type provided in the portable terminal. The storing unit 434 stores program data necessary for controlling the operation of the portable terminal and programs necessary for functional operations of the present invention. The programs may be application programs for key input control. The storing unit 434 stores data generated during the control of the portable terminal and as data is generated by a user. The storing unit 434 further stores data received from the outside, for example, context messages. The controller 420 controls the orientation of letters or numbers displayed on a keypad provided in the portable terminal. In the controller 420, the mode setting unit 422 sets an input mode according to the direction of a display screen of the portable terminal. If the user moves the display screen in a predetermined direction, it means that the display screen and the keypad are powered on to display screen data corresponding to an operation of the portable terminal. The input mode is a preset operation in the portable terminal, such that when the user moves the display screen in a predetermined direction, the movement direction is sensed and the input mode is changed to a mode corresponding to the sensed movement direction. According to a user desired input mode, Qwerty keys, alphabets, Korean letters, numbers, or special characters are provided. The mode setting unit 422 of the controller 420 recognizes the direction of letters or numbers of the keypad as the vertical direction when display screen is moved by the user in the vertical direction, and thus sets the input mode to a vertical input mode. When the display screen is moved by the user in the horizontal direction, the mode setting unit 422 of the controller 420 recognizes the direction of the letters or numbers of the keypad as the horizontal direction, and thus sets the input mode to a horizontal input mode. The sensor 424 senses the movement direction of the display screen moved by the user. A corresponding operation is performed such that an input mode is set by the mode setting unit 422 based on the movement direction of the display screen, i.e., the vertical direction or the horizontal direction. More specifically, the display screen is slid by the user in a particular direction in the case of a dual slide-type terminal, and is opened by the user in a particular direction for a dual folder-type terminal. The display screen according to the present invention, when being applied to a dual slide-type terminal, is coupled to a main body of the portable terminal by means of a sliding module, such that it can move in the first direction, i.e., the vertical direction, and move in the second direction, i.e., the horizontal direction.

The display screen according to the present invention, when applied to a dual folder-type terminal, is hinge-coupled to a main body of the portable terminal on any one surface thereof, such that it can move in the vertical direction and in the horizontal direction. The display screen according to the present invention, when applied to a dual slide-type terminal, is coupled to a main body of the portable terminal by means of a sliding module, such that it can move in the vertical direction and move in the horizontal direction.

Therefore, in both of the dual slide-type terminal and the dual folder-type terminal, the display screen includes the vertical direction (or the first direction) and the horizontal direction (or the second direction), and can move in these directions.

The controller 420 controls the orientation direction of letters or numbers on the keypad according to the mode which is set by the mode setting unit 442 based on the direction information of the display screen obtained by the sensor 424.

As is apparent from the foregoing description, letters and numbers oriented in different directions corresponding to different input modes are arranged in a single keypad in a portable terminal, making it easy to carry the portable terminal. Moreover, by using a keypad that is adaptable to be oriented in the same direction as the direction of a display screen which can be moved in at least two directions, an environment suitable for a user desired input mode is provided and thus user convenience is improved.

Furthermore, preset key information corresponding to the movement direction of the display screen is displayed on the keypad, instead of directly printing a plurality of letters or numbers onto the keypad, making it possible to maintain a slim structure of the portable terminal and making it easy to input letters and numbers.

Operations associated with the adaptive keypad device for a portable terminal according to an embodiment of the present invention can be achieved as described above.

While the present invention has been shown and described with reference to an embodiment thereof, it will be understood by those skilled in the art that various changes in form and details may be made therein without departing from the spirit and scope of the invention as defined by the appended claims.

## Claims

1. An adaptive keypad device for a portable terminal, comprising:
a display screen (210) being one of opened from or slid on a keypad in at least two directions;
an adaptive keypad on which characters are displayed in a same direction as a direction in which the display screen (210) is opened or slid;
a display element disposed on a side surface of the adaptive keypad (212); and
a controller (420) connected to the display element to control a display state of the display element according to the direction the display screen is opened or slid.

2. The adaptive keypad device of claim 1, wherein the adaptive keypad is a flexible plastic board, on a side surface of which a metal dome switch is disposed.

3. The adaptive keypad device of claim 1, wherein the characters displayed on the adaptive keypad are changed according to an input mode.

4. The adaptive keypad device of claim 3, wherein the input mode includes at least one of a Qwerty keyboard, alphabets, Korean letters, numbers, or special characters.

5. The adaptive keypad device of claim 1, wherein the display state is a direction of the characters displayed on the keypad.

6. The adaptive keypad device of claim 1, wherein the display element is comprised of an electrophoretic material.

7. The adaptive keypad device of claim 1, wherein the display screen is opened in a first direction or a second direction by being coupled to the portable terminal by means of a single hinge, or is slid in the first direction by means of a first sliding module or slid in the second direction by means of a second sliding module.

8. A method for controlling an adaptive keypad device for a portable terminal, the method comprising the steps of:
setting a direction of a display of characters of a keypad according to a direction a display screen is moved;
sensing a direction of sliding or opening of the display screen; and
displaying the characters of the keypad according to the sensed direction of the sliding or opening the display screen.

9. The method of claim 8, further comprising changing the characters displayed on the keypad according to a user desired input mode.
